# EUROPÄISCHE PATENTSCHRIFT

(11) **EP 2 322 817 B1**
(45) Veröffentlichungstag und Bekanntmachung des Hinweises auf die Patenterteilung: **11.01.2012**
(21) Anmeldenummer: 10191281.4
(22) Anmeldetag: 16.11.2010
(51) Int. Cl.: F16C 33/78, F16J 15/32

(54) **Dichtungsanordnung mit Vorspannungselement**
Seal assembly with pretensioning element
Agencement d'étanchéité doté d'un élément de prétension

(30) Priorität: 17.11.2009 DE 102009053598
(43) Veröffentlichungstag der Anmeldung: 18.05.2011
(73) Patentinhaber: Schaeffler Technologies GmbH & Co. KG, 91074 Herzogenaurach (DE)
(72) Erfinder: Schaefer, Marc-Andre, 97532, Uechtelhausen (Zell) (DE)

(56) Entgegenhaltungen:
- WO-A1-2004/065806
- DE-A1-102006 044 272

## Beschreibung

### Gebiet der Erfindung

Die Erfindung betrifft eine Dichtungsanordnung zur Abdichtung eines Wälzlagers, wobei die Dichtungsanordnung eine zur Bildung eines Dichtkontaktes vorgesehene Dichtlippe aufweist. Ferner betrifft die Erfindung ein Wälzlager, insbesondere Radlager, mit einer Dichtungsanordnung zur Abdichtung des Wälzraumes mit einer derartigen Dichtungsanordnung.

### Stand der Technik

### Hintergrund der Erfindung

Wälzlager, insbesondere Radlager, für Personenkraftwagen und Lastkraftwagen, können durch eindringende Fremdpartikel und auch eindringende Feuchtigkeit, die bis in den Wälzraum des Wälzlagers gelangt, nachhaltig geschädigt werden, was zu einem vorzeitigen Ausfall des Wälzlagers führt. Um dem zuvorzukommen werden Dichtungsanordnungen bereitgestellt, die zwischen den.. drehenden Lagerteilen, wie z.B. einem Innenring und einem Außenring, oder zwischen einer Radnabe und einem Lagerring schleifend abdichten. Hierfür ist es unerlässlich eine Dichtlippe vorzusehen, die schleifend zwischen zwei relativ zueinander drehbaren Lagerteilen anliegt und damit auf der Anlagefläche der relativ zur Dichtlippe rotierbaren Laderteils einen Dichtkontakt bildet.

Bis heute werden sowohl axiale als auch radiale Dichtlippen eingesetzt, die beispielsweise an einem Schleuderblech, einem Lagerring oder der Radnabe anliegen und innerhalb der Dichtungsanordnung gegenüber dieser Anlage bzw. Dichtfläche vorgespannt sind. Problematisch daran ist, dass die Dichtlippe, die typischerweise aus einem elastomeren, bzw. einem elastischen, Werkstoff besteht, einem gewissen Materialabrieb unterliegt, der durch eine Wechselwirkung des Schmiermittels mit eingedrungenen Fremdpartikel verursacht wird und nachhaltig an Material und damit auch an Vorspannung gegenüber der Anlagefläche, verliert.

Es ist üblich Dichtlippen, gegebenenfalls Dichtlippen unterschiedlicher Art, so anzuordnen, dass diese mehrere Zwischenräume bilden, durch die die Fremdpartikel hindurchwandern müssen, bevor sie zum Wälzraum gelangen. Weiter innenliegende Dichtlippen können so lange geschützt werden, bis der Abrieb der vorgelagerten Dichtlippe so groß wird, dass anstatt des Dichtkontaktes lediglich eine nicht berührende, vorspannungslose Spaltdichtung verbleibt. Dadurch entsteht der Nachteil, dass eine hohe Dichtwirkung für langlebige Dichtungsanordnungen dadurch erkauft wird, dass anfänglich eine hohe Zahl von Dichtlippen anliegt und damit nachteiligerweise einen hohen Reibwert verursachen. Dieser Reibwert nimmt über die Lebensdauer des Wälzlagers zusammen mit der Dichtwirkung immer weiter ab, bis die Dichtungsanordnung verschlissen ist.

Aus DE 10 2006 0 44 272 A1 ist eine gattungsgemäβe Dichtungsanordnung bekannt, die zwischen einem Außenring und einem Innenring angeordnet werden kann, als Kassettendichtung ausgeführt ist und als solche zwei radiale Dichtlippen aufweist, die beide auf einem zylindrischen Teil eines Schleuderringes aufliegen. Die Dichtungsanordung weist außerdem eine axiale Dichtlippe auf, die gegenüber einem radial extendieren den Teil der Schleuderringes axial vorgespannt ist. Die Vorspannung der axialen Dichtlippe ergibt sich aus der Position des zugehörigen Trägerbleches in Bezug zum Schleuderring, der die Anlagefläche bzw. Dichtfläche aufweist. Im Gegensatz dazu besteht die Vorspannung einer radialen Dichtlippe deshalb, weil diese in radialer Richtung - in diesem Fall durch den Schleuderring - aufgeweitet wird.

### Aufgabenstellung

### Zusammenfassung der Erfindung

Die Aufgabe der Erfindung ist es daher eine Dichtungsanordnung anzugeben, die einfach und günstig herzustellen ist und einen niedrigen Reibwert über einen Großteil der Betriebszeit aufweist.

Die Aufgabe wird durch eine Dichtungsanordnung der eingangsgenannten Art dadurch gelöst, dass die Dichtlippe mittels eines ein Volumen aufweisendes Vorspannungselements vorgespannt ist und das Volumen des Vorspannungselementes in Abhängigkeit eines Feuchtigkeitswertes des Wälzlagers änderbar ist.

Erfindungsgemäß ist die Dichtlippe der Dichtungsanordnung zur Abdichtung eines Wälzlagers durch die Bildung eines Dichtkontaktes vorgesehen. Der Dichtkontakt besteht hierbei aus der durch eine Vorspannung hergestellte Kontakt zwischen der Dichtlippe und einer Dichtfläche, die einem anderen Bauteil der Dichtungsanordnung oder des Wälzlagers angehört. Der Dichtkontakt kann ein schleifender oder ein statischer Dichtkontakt sein, der zur luftdichten beziehungsweise wasserdichten Abdichtung vorgesehen ist. Die Dichtlippe ist zunächst in üblicher Weise vorgespannt, das heißt, die Vorspannung wird beispielsweise durch eine bestimmte Position des die Dichtlippe ausbildenden elastischen Teils, beziehungsweise dessen Trägerteils innerhalb der Dichtungsanordnung hervorgerufen, oder durch eine Aufweitung realisiert. Die Vorspannungskraft, die auf der Dichtlippe lastet, ist dabei durch eine Volumenänderung eines Vorspannungselementes änderbar. Die Dichtlippe kann durch eine Volumenänderung entweder stärker vorgespannt oder entlastet werden. In Abhängigkeit davon wo die Dichtlippe das Vorspannungselement aufweist, kann eine Volumenabnahme eine Erhöhung oder Erniedrigung der Vorspannung oder eine Volumenzunahme eine Erhöhung oder Erniedrigung der Vorspannung verursachen. Ausschlaggebend ist, dass die Volumenänderung des Vorspannungselementes die Vorspannung und damit den Auflagedruck der Dichtlippe im Dichtkontakt vorteilhaft beeinflusst, d.h. die Dichtwirkung variabel anpassen kann. Damit bilden das Vorspannungselement zusammen mit der vorgespannten Dichtlippe ein intelligentes Nachtstellsystem, welches den optimalen Dichtungsdruck einstellt.

Es ist vorgesehen, dass das Volumen des Vorspannungselementes von einem Feuchtigkeitswert des Wälzlagers abhängig ist. Ein Feuchtigkeitswert des Wälzlagers bedeutetet in diesem Zusammenhang ein detektierbares Mass für eine Wassermenge oder Feuchte, wobei dieser Feuchtigkeitswert an einer bestimmten Stelle der Dichtungsanordnung durch eine Volumenänderung des Vorspannungselementes detektiert wird. Dies könnte beispielsweise ein durch eine Spaltdichtung geschützter Vorraum der Dichtungsanordnung sein, ein Zwischenraum zwischen zwei anliegenden Dichtlippen oder ein anderer gegebenenfalls ringförmiger Raum der Dichtungsanordnung. In Abhängigkeit der Luftfeuchtigkeit oder sogar in Abhängigkeit des eingedrungenen, flüssigen Wassers wird eine Volumenänderung des Vorspannungselementes und damit eine Vorspannungsoptimierung intelligent durchgeführt.

Bei einer vorteilhaften Ausführungsform besteht das Vorspannungselement aus einem wasserabsorbierenden Material, insbesondere einem Superabsorber oder weist das wasserabsorbierende Material auf. Durch die Wasseraufnahme wird die innere Struktur des wasserabsorbierenden Materials geändert, so dass dieses ein größeres Volumen beansprucht und Druck auf die unmittelbare Umgebung ausübt. Insbesondere vorteilhaft ist, wenn das Vorspannungselement das aufgenommene Wasser zu einem späteren Zeitpunkt wieder abgeben kann, um wieder zu ursprünglichen oder zumindest einem reduzierten Volumen zu gelangen. Dies ist insofern vorteilhaft, als dass in solch einem Fall die Dichtungsanordnung auf die Luftfeuchte, beziehungsweise auf eine bestimmte Menge flüssiges Wasser reagiert, um den Dichtungsdruck im Dichtkontakt zu erhöhen. Damit muss der höhere Reibwert nur solange toleriert werden, wie die hohe Luftfeuchte beziehungsweise das Wasser präsent sind. Danach wird das im Vorspannungselement gespeicherte Wasser wieder abgegeben. Das Volumen des Vorspannelementes reduziert sich und stellt den geringeren Dichtungsdruck im Dichtkontakt wieder her. Auf diese Weise wird der Reibwert nur temporär erhöht, beziehungsweise wird zu jedem Zeitpunkt an die Luftfeuchte angepasst.

Bei einer vorteilhaften Ausführungsform ist das wasserabsorbierende Material ein Superabsorber. Superabsorber sind Kunststoffe (Superabsorbent Polymers, SAP), die in der Lage sind bis zum tausendfachen ihres Eigengewichts an Flüssigkeiten aufzunehmen. Zu diesen Flüssigkeiten gehört in der Regel auch Wasser. Bisher wurden Superabsorber in Hygieneartikel, wie beispielsweise in Babywindeln eingesetzt. Superabsorber bestehen aus einem Copolymer aus Acrylsäure (Propensäure, C₃H₄0₂) und Natriumacrylat (Natriumssalz Acrylsäure, NaC₃H₃O₂ ). Bei beiden Stoffen handelt es sich um Monomere, deren Verhältnis in der Regel zueinander variiert wird. Beide Monomere werden durch einen so genannten Kernvernetzter (Core-Cross-Linker, CXL) stellenweise mittels chemischen Brücken miteinander verbunden. Bei dieser Vernetzung stellt sich die vorteilhafte Eigenschaft der Wasseraufnahmefähigkeit ein. Beim Eindringen von Wasser in den Superabsorber quillt dieser auf und strafft auf molekularer Ebene dieses Netzwerk. Dadurch wird das Wasser innerhalb dieses Netzwerks gebunden und kann nicht mehr entweichen.

Bei einer vorteilhaften Ausführungsform wird er Superabsorber des weiteren auch noch oberflächennachvemetzt (Surface-Cross-Linking). Durch eine chemische Behandlung werden weitere Vernetzungen in der äußeren Schicht des Superabsorbers gebildet, womit in der.äußeren Schicht weitere Straffungen bei der Flüssigkeitsabsorption auftreten, die ein Entweichen des Wassers - selbst unter Druck - wirksam verhindern. Dies hat den besonderen Vorteil, dass ein aus einem Superabsorber bestehendes Vorspannungselement mit einer derartigen Oberflächennachvernetzung auch trotz einer starken Zentrifugalkraft, wie sie im Radlager allgemein und damit auch in Dichtungsanordnungen auftritt, wirksam entgegenwirken kann und das aufgenommene Wasser auch bei hohen Drehzahlen im Superabsorber verbleibt. Des weiteren ist vorteilhaft am Superabsorber, dass das Wasser im Falle einer geringen Luftfeuchte, also einer vergleichsweise trockenen Luft, in der Umgebung des Superabsorbers wieder aus dem Superabsorber ausdüstet. Damit bleibt die variable Einstellung auf die Umgebungsfeuchte trotz Nachtvernetzung erhalten.

Bei einer vorteilhaften Ausführungsform ist das Vorspannungselement mit einem die Dichtlippe bildenden, elastischen Teil gekoppelt. Damit ist es möglich die durch die Volumenänderung entstandene Kraft unmittelbar auf das elastische Teil und damit auch die Dichtlippe zu übertragen. Dabei kann das Vorspannungselement nur an das elastische Teile angrenzen oder mit diesem materialschlüssig sein. Im Falle eines Superabsorbers, der ein Polymer ist, kann eine Materialschlüssigkeit mit einem üblichen Dichtungselastomer einer Dichtlippe auf chemischem Wege hergestellt werden. Dadurch wird beispielsweise ein ungewolltes Ablösen, oder eine Positionsveränderung des Vorspannungselementes vermieden.

Vorteilhafterweise bewirkt eine Änderung des Volumens des Vorspannungselementes eine Änderung einer relativen Position der Dichtlippe innerhalb der Dichtungsanordnung und/oder einer Form der Dichtlippe. Hierbei eröffnen sich mehrere Möglichkeiten, wie der Dichtkontakt in optimalerweise für eine spezielle Dichtungsanordnung am besten reguliert wird. Es kann von Vorteil sein die relative Position der Dichtlippe innerhalb der Dichtungsanordnung zu ändern, damit der Materialabrieb der Dichtlippe ebenfalls durch die aktive Dichtkontaktkontrolle kompensiert wird. Dabei kann es sein, dass der Dichtkontakt auf der Anlagefläche eines Schleuderrings, eines Innenrings, eines Außenrings, einer Radnabe oder einem anderen Bauteil der Dichtungsanordnung oder des Wälzlagers im Laufe der Zeit wandert, beziehungsweise stärker gekrümmt wird.

Vorteilhafterweise kommt die Dichtlippe unter Vorspannung an einer Anlagefläche zur Anlage und bildet dort den Dichtkontakt. Dabei ist unerheblich, ob der durch die Vorspannung erzeugte, optimierte Dichtungsdruck durch eine Formänderung der Dichtlippe oder durch eine Positionsänderung des Dichtkontaktes hervorgerufen wird.

Bei einer vorteilhaften Ausführungsform ist die Position der Dichtlippe innerhalb der Dichtungsanordnung derart änderbar, dass der Dichtkontakt in einen aus der Anlagefläche und der Dichtlippe gebildeten Dichtspalt übergeht. Es ist beispielsweise denkbar, dass eine einer radialen Dichtlippe vorgelagerte, axiale Dichtlippe für die momentan erforderliche Dichtwirkung der Dichtungsanordnung nicht notwendigerweise schleifend anliegen muss. Dann ist es möglich das Vorspannungselement derart auszulegen, dass die Vorspannung bei besonders trockenen Verhältnissen auf die schleifende Dichtwirkung der axialen Dichtlippe gänzlich verzichtet und diese lediglich als Spaltdichtung in Kombination mit der Anlagefläche verwendet wird.

Vorteilhafterweise ist das Konzept der intelligenten Druckkontaktregulierung bei schleifendem oder bei statischem Dichtkontakt einsetzbar, auch wenn bei statischen Dichtkontakten die Reibwertreduzierung kaum eine Problematik darstellt. Dennoch kann die aktiv kontrollierbare Dichtlippe ein Ventil bilden.

Bei einer vorteilhaften Ausführungsform nimmt der schleifende Dichtkontakt in Abhängigkeit vom Materialabrieb der Dichtlippe unterschiedliche Positionen auf der Anlagefläche ein. Damit ist nicht nur, wie bereits erwähnt, eine Regulierung der Vorspannung möglich, sondern es können so genannte Wanderlippen eingesetzt werden, die im wesentlichen parallel zu der Anlagefläche des Dichtkontaktes angeordnet sind und somit auch bei geringer Vorspannkraft mit der Anlagefläche in Dichtkontakt zu bringen sind. Damit kann ein enormer Materialabrieb in Kauf genommen werden, beziehungsweise die Lebensdauer dieses Dichtkontaktes deutlich verlängert werden, ohne auf die regulierende Wirkung des Vorspannungselementes verzichten zu müssen.

Bei einer vorteilhaften Ausführungsform ist die Dichtlippe als eine radiale oder eine axiale Dichtlippe ausgeführt. Es gibt keinen Grund Vorspannungselemente lediglich bei radialen beziehungsweise axialen Dichtlippen einzusetzen. Vorteilhafterweise können für eine Dichtlippe mehrere Vorspannungselemente eingesetzt werden, damit die Dichtlippe die korrekte Form beziehungsweise die korrekte Vorspannung erlangt. Alternativ ist es möglich ein Vorspannungselement mit zwei Dichtlippen zu koppeln. Damit können beide Vorspannungen gleichermaßen reguliert werden.

Bei einer vorteilhaften Ausführungsform bewegt das Vorspannungselement die Dichtlippe wippenartig mittels eines Anlageringes. Damit ist es ebenfalls möglich die durch die Volumenänderungen des Vorspannungselementes entstehende Kraft vorteilhaft umzudenken, so dass die Dichtlippe optimal vorgespannt wird.

Bei einer vorteilhaften Ausführungsform ist das Vorspannungselement einstückig mit einem Vorspannring verbunden. Der Vorspannring ist dann dazu vorgesehen das Vorspannungselement zu tragen und in der für die Kraftübertragung optimalen Position zu halten. Vorteilhafterweise bilden das Vorspannungselement und der Vorspannring zusammen einen zweilagigen Betätiger aus. In diesem Fall agiert der Betätiger ähnlich wie ein Bimetall, das sich das Vorspannungselement im Verhältnis zum Vorspannring durch die Wasseraufnahme ein deutlich größeres Volumen erlangt und somit den Betätiger in eine Betätigungsrichtung krümmt und somit Vorspannung aufbaut.

Bei einer vorteilhaften Ausführungsform ist die Dichtlippe einstückig mit dem Vorspannring des zweilagigen Betätigers verbunden. Damit ergibt sich eine extrem kompakte Bauweise, die auch zu einer erhöhten Stabilität und Funktionalität der Dichtungsanordnung führt. Eine weitere Kompaktheit ,beziehungsweise Raumersparnis, entsteht, wenn die Dichtlippe, der Vorspannring und das Vorspannelement zusammen eine dreilagige Dichtlippe ausbilden. Diese kann wie der zuvor erwähnte Betätiger zur Vorspannungskraftübertragung verwendet werden und auch für die Realisierung des Dichtkontaktes selbst. Diese Dichtlippen sind beliebig innerhalb einer Dichtungsanordnung kombinierbar, so dass beispielsweise Feuchtigkeitswerte in unterschiedlichen Räumen der Dichtungsanordnung berücksichtigt werden können. So ist es beispielsweise möglich das Vorspannungselement in dem der Dichtlippe vorgelagerten Raum anzusiedeln (dies ist bei besonders saugfähigen Vorspannungselementen anzuraten) oder in einem Zwischenraum zwischen zwei anliegenden Dichtlippen, der bereits verhältnismäßig gut gegenüber der feuchten Außenwelt abgeschirmt ist. An der zuletzt genannten Stelle lässt sich ein weniger saugfähiges Vorspannungselement einsetzen oder eine kleinere Menge eines saugfähigen Vorspannungselementes. Man könnte auch sagen, dass die erste Lösung eine präventive Regulierung darstellt und die zweite Lösung eine schadensbegrenzende Regulierung, weil hierbei ein Teil der Feuchtigkeit bereits eine Dichtlippe passiert hat.

Bei einer vorteilhaften Ausführungsform kann eine der zuvor beschriebenen aktiv kontrolllierten Dichtlippen zunächst (keine Feuchtigkeit vorhanden) einen Spalt mit der Kontaktfläche bilden, wobei lediglich eine Hauptlippe (z.B. eine radiale Dichtlippe) an deren Anlagefläche schleifend anliegt. Ohne Feuchtigkeitseintrag bleibt die Dichtungsanordnung reibungsarm, da nur eine Dichtlippe anliegt. Erst bei einem Feuchtigkeitseintrag wird die aktiv kontollierte Lippe durch das Vorspannungselment betätigt und begibt sich in einen Vorspannungsbereich gegenüber ihrer Kontkaktfläche. Damit erhöht die Dichtungsanordung ihre Effektivität, aber auch ihren Reibwert. Dieser Vorgang ist reversibel sobald die Feuchtigkeit ausbleibt.

Die erfindungsgemäßen Dichtungsanordnungen lassen sich beispielsweise als Kassettendichtungen ausführen und in verschiedenen Arten von Wälzlagern, insbesondere Radlagern, einsetzen. Generell lohnt sich der Einsatz einer erfindungsgemäßen Dichtungsanordnungen überall dort, wo schmutzige und nasse Betriebsbedingungen herrschen oder besondere Belastungen für die Dichtungen auftreten, wie beispielsweise chemisch aggressive Stoffe. In diesem Zusammenhang wäre Streusalz zu nennen, das Elastomere von Dichtlippen stark angreifen kann. Dazu braucht das Wälzlager im einfachsten Fall lediglich zwei sich gegenüberliegende relativ zueinander rotierende Flächen, zum Beispiel eine zylindrische und eine hohlzylindrische Fläche, aufzuweisen, an denen die Dichtungsanordnung befestigt werden kann.

Weitere vorteilhafte Ausbildungen und bevorzugte Weiterbildungen der Erfindung sind der Figurenbeschreibung und den Unteransprüchen zu entnehmen. Im folgenden wird die Erfindung anhand der in den Figuren dargestellten Ausführungsbeispielen näher beschrieben und erläutert.

### Kurze Beschreibung der Zeichnungen

Es zeigen:
- Fig. 1: eine Abbildung einer Dichtungsanordnung mit einer wippenartig betätigbaren axialen Dichtlippe,
- Fig. 2: eine Abbildung einer Dichtungsanordnung mit einer wippenartig betätigbaren axialen Wanderlippe,
- Fig. 3: eine Abbildung einer Dichtungsanordnung mit einer formverän- derlichen axialen Dichtlippe,
- Fig. 4: eine Abbildung einer Dichtungsanordnung mit einem zweilagigen Betätiger und einer axialen Wanderlippe,
- Fig. 5: eine Abbildung der Dichtungsanordnung aus Fig. 4 im nicht betä- tigten Fall,
- Fig. 6: eine Abbildung einer dreilagigen Wanderlippe mit einem Dicht- kontakt an einem Schleuderring, und
- Fig. 7: eine Abbildung einer Dichtungsanordnung mit der dreilagigen Wanderlippe aus Fig. 6.

### Beschreibung der Zeichnungen

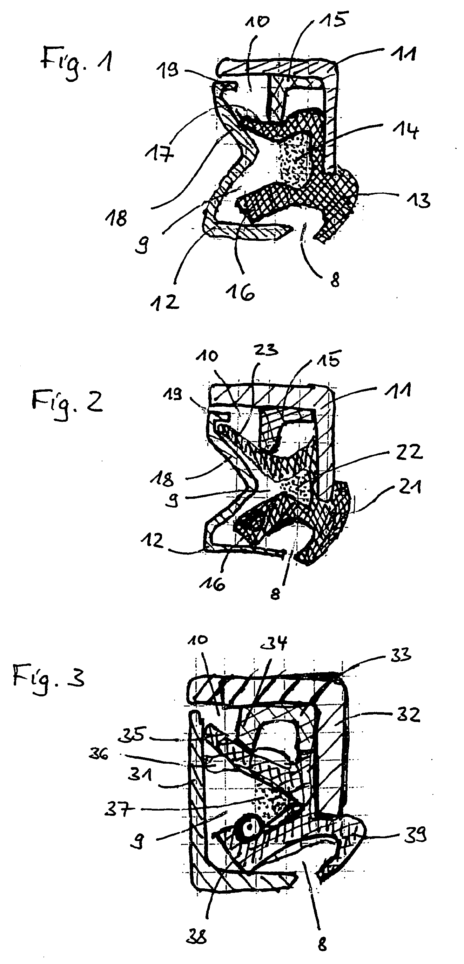

Fig. 1 zeigt eine Abbildung einer Dichtungsanordnung mit einer wippenartig betätigbaren axialen Dichtlippe 17.

Die Dichtungsanordnung ist als Kassettendichtung ausgeführt, die einen Trägerring 11 aufweist, der einen elastischen Teil 13 und ein Anlageblech 15 trägt, wobei innerhalb des elastischen Teils 13 zwischen der radialen Dichtlippe 16 und der axialen Dichtlippe 17 ein Absorber 14 angeordnet ist, der bei Volumenausdehnung sowohl auf die Vorspannung der radial Dichtlippe 16, als auch auf die Vorspannung der axialen Dichtlippe 17 einwirkt.

Damit dies geschieht muss etwas Feuchtigkeit in den Zwischenraum 9 gelangen, der von den beiden Dichtlippen 17,16 begrenzt wird. Ist dies geschehen, so drückt der Absorber 14 in radialer Richtung auf die axiale Dichtlippe 17, wobei über den Auflagepunkt des Anlagebleches 15 der Dichtungsdruck im Dichtkontakt an der Innenfläche des Schleuderrings 12 in dessen konischen Bereich 18 erhöht wird. Damit wird das Eindringen von Feuchtigkeit nachhaltig erschwert. Die effektive Dichtwirkung der gesamten Dichtungsanordnung wird als Reaktion auf die erhöhten Feuchtigkeitswerte außerhalb des Wälzlagers, beziehungsweise im Vorraum 10 der Dichtungsanordnung, erhöht.

Gleichzeitig wird die Vorspannung auf die radiale Dichtlippe 16 ebenfalls durch eine radiale Volumenvergrößerung des Absorbers 14 erhöht, um das Vordringen der Feuchtigkeit in den nächsten Zwischenraum 8 zu verhindern. Hier würde sich die Feuchtigkeit besonders negativ auswirken, da der Zwischenraum 8 möglicherweise auch von der Radnabe oder einem Innenring begrenzt wird, der in der Regel stärker als der Schleuderring 12 dem Rostfraß ausgesetzt ist.

Vorteilhafterweise sind aktiv kontrollierte Dichtlippen mit herkömmlichen Dichtungskonzepten leicht zu kombinieren. Beispielsweise ist es möglich eine Spaltdichtung durch das Endstück 19 des Schleuderringes 12 zu bilden, der in diesem Fall im Längsschnitt zur Rotationsachse Σ-ähnlich ausgebildet ist.

Fig. 2 zeigt eine Abbildung einer Dichtungsanordnung mit einer wippenartig betätigbaren axialen Wanderlippe 23. Für die bereits in der Fig. 1 verwendeten Bezugszeichen wird auf die Figurenbeschreibungen zu Fig. 1 verwiesen.

Die abgebildete Dichtungsanordnung unterscheidet sich von der Dichtungsanordnung der Figur 1 dadurch, dass eine Wanderlippe 23 vorgesehen ist, die nahezu parallel zu einem konischem Abschnitt 18 des Schleuderrings 12 angeordnet ist und deshalb auch mit wenig Vorspannung einen erheblichen Materialabrieb in Kombination mit der selbst regulierenden Dichtungskontrolle kompensieren kann.

Man könnte auch sagen, dass die Dichtungsanordnung der Figur 1 im wesentlichen der Figur 2 entspricht, wobei die Wanderlippe 23 bereits weit gehend durch die Material Abrieb verkürzt worden ist und der Absorber 22 auf die radiale Ausdehnung des Absorber 14 der Fig. 1 aufgrund der Wasseraufnahme angewachsen ist.

Fig. 3 zeigt eine Abbildung einer Dichtungsanordnung mit einer formveränderlichen axialen Dichtlippe 35.

Die gezeigte Dichtungsanordnung ist ebenfalls als Kassettendichtung ausgeführt, die einen Schleuderring 31 und einen ein elastisches Teil 39 tragenden Trägerring 32 aufweist, wobei der Trägerring 32 und der Schleuderring 31 im Längsschnitt zur Rotationsachse die klassische L-Form aufweisen.

Die Vorspannung der radialen Dichtlippe 38 wird hauptsächlich durch die Federverstärkung hervorgerufen, so dass der Absorber 37 im wesentlichen in radialer Richtung auf die axiale Dichtlippe 35 wirkt und diese mit dem bekannten wippenartig im Effekt über das Endstück 34 des Anlagebleches 33 gegenüber der Innenfläche des Schleuderrings 31 vorspannt. Nach einem gewissen Materialabrieb an der Spitze der axialen Dichtlippe 35 gleitet die axiale Dichtlippe 35 an der Innenseite des Schleuderrings 31 radial nach innen, wobei diese ihre Form dahingehend ändert, dass nunmehr im Bereich des Absorbers 37 eine stärkere Krümmung vorliegt, die zur Verstärkung der Vorspannung beiträgt. Die mit großer Vorspannung beaufschlagte axiale Dichtlippe 36 ist in Fig. 3 zusätzlich zur weniger vorgespannten axialen Dichtlippe 35 angedeutet.

Auch diese Dichtungsanordnung ist wie die aus den Fig. 1 und 2 bekannten Dichtungsanordnungen nachisolierend, das heißt, die Feuchtigkeit muss zuerst in den Zwischenraum 9 eindringen, bevor die Dichtwirkung der axialen Dichtlippe erhöht werden kann. Bei einer normalen Kassettendichtung ist dies der Zustand bei dem die Axiallippe verschlissen ist und nur noch in Form einer Spaltdichtung zur Dichtwirkung des Systems beitragen kann. Durch den Absorber 37 wird bei einer ersten Leckage jedoch die axiale Dichtlippe 35 bzw 36 wieder aktiviert und damit die Lebensdauer der Dichtungsanordnung verlängert.

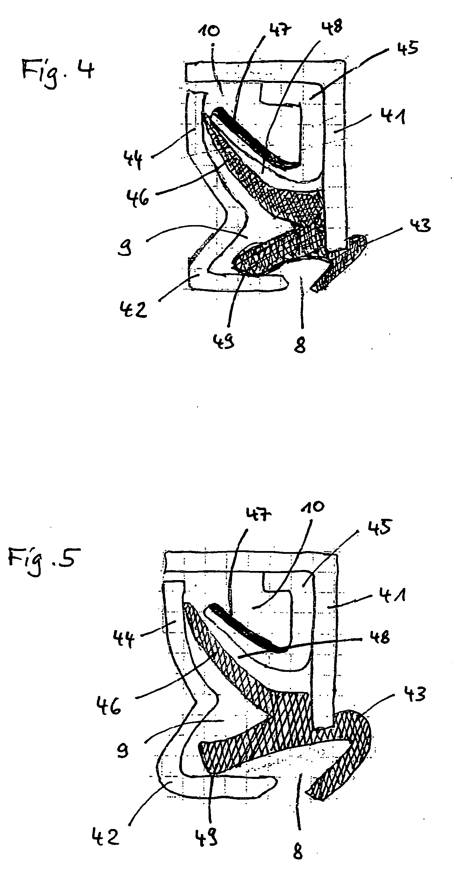

Fig. 4 zeigt eine Abbildung einer Dichtungsanordnung mit einem zweilagigen Betätiger und einer axialen Wanderlippe 46. Der zweilagige Betätiger wird aus einem Vorspannring 45 und dem darauf materialschlüssig angebrachten Superabsorber 47 gebildet. Der Betätiger wirkt ähnlich wie ein Bimetall, da sich der Superabsorber 47 bei in den Vorraum 10 eindringendem Wasser an der radial außenliegenden Seite stark ausdehnt. Somit übt der Betätiger Druck auf die Wanderlippe 46 aus, die ihrerseits einen schleifenden Dichtkontakt mit der Innenseite des Endstücks 44 des Schleuderringes 42 eingeht. Der Dichtungsdruck ist wie vorher beschrieben von der aufgenommenen Wassermenge der Superabsorber 47 abhängig.

Bei dieser Anordnung ist vorteilhaft, dass das einmal in den Vorraum 10 eingedrungene Wasser vom Superabsorber 47 ohne weiteres, nach und nach wieder abgegeben werden kann. Ein Verdunsten des aufgenommenen Wassers ist aufgrund der Spaltdichtungen zwischen dem Schleuderring 42 und dem Trägerring 41 ohne weiteres möglich und wird zudem durch den Bernoullischen Saugeffekt in Verbindung mit den gebildeten Spalt unterstützt.

Fig. 5 zeigt eine Abbildung der Dichtungsanordnung aus Fig. 4 im nicht betätigten Fall. Hierbei ist die Wanderlippe 46 mit einer geringen Vorspannung beaufschlagt, die zu dem geringsten Reibwert führt, der sich automatisch bei geringer Luftfeuchte einstellt.

Die radiale Dichtlippe 49 ist in dieser Dichtungsanordnung nicht aktiv reguliert, da das Eindringen in den Zwischenraum 9 sehr gut verhindert werden kann.

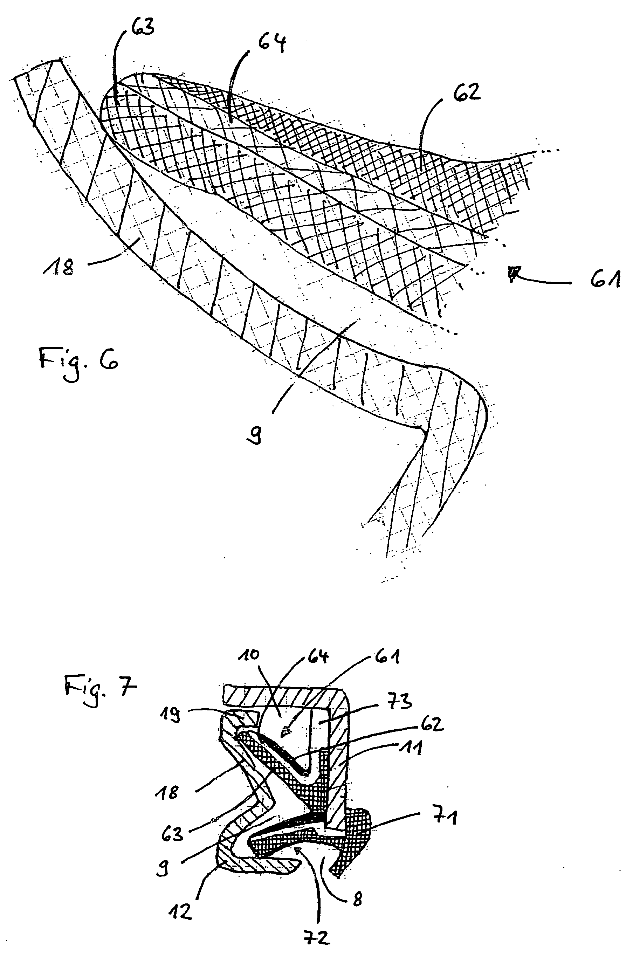

Fig. 6 und 7 zeigen eine Abbildung einer dreilagigen Wanderlippe 61 mit einem Dichtkontakt an einem konischen Segment 18 beziehungsweise eine Abbildung einer Dichtungsanordnung mit dieser zweilagigen Wanderlippe. 61.

Vorteilhafterweise sind der Superabsorber 62, das Elastomer 63 einstückig mit einer Zwischenlage 64 des Vorspannrings 73 verbunden. Hierbei handelt es sich um einen materialschlüssigen Verbund, der deshalb möglich ist, weil alle Komponenten auf einer Polymerbasis herstellbar sind und nicht notwendigerweise klar zueinander abgegrenzt sein müssen, sondern Übergangszonen aufweisen können.

An der Wanderlippe 61 ist vorteilhaft, dass diese bei besonders geringer Luftfeuchte nicht notwendigerweise im Dichtkontakt mit dem konischen Segment 18 belassen werden muss. Da nachfolgend eine radiale Dichtlippe 72, die ebenfalls dreilagig ausgeführt ist, vorgesehen ist, kann auf den Dichtkontakt der axialen Dichtlippe 61 im genannten Fall verzichtet werden. Entsprechendes gilt für die radiale Dichtlippe 72 nicht. Hier wird die Vorspannung in radialer Richtung vom Superabsorber zu keinem Zeitpunkt komplett aufgehoben, um den Wälzraum des Wälzlagers stets sicher von der Außenwelt abzuschirmen. Der Wälzraum ist zusätzlich noch durch eine herkömmliche, radiale Dichtlippe abgedichtet, die zusammen mit der radialen Dichtlippe 72 den Zwischenraum 8 bildet.

Zusammenfassend betrifft die Erfindung eine Dichtungsanordnung zur Abdichtung eines Wälzlagers, wobei die Dichtungsanordnung eine zur Bildung eines Dichtkontaktes vorgesehene Dichtlippe aufweist. Es soll ein Ausweg aus dem Dilemma aufgezeigt werden, dass langlebige Dichtungsanordnungen in der anfänglichen Betriebslaufzeit einen vergleichsweise hohen Reibwert aufweisen, der mit der Zeit zusammen mit der Dichtwirkung der Dichtungsanordnung nachlässt. Hierzu wird eine aktive Regulierung der mittels eines ein Volumen aufweisendes Vorspannungselementes vorgespannte Dichtlippe vorgeschlagen. Dieses Volumen ist in Abhängigkeit eines Feuchtigkeitswertes des Wälzlagers änderbar. Somit ist die Vorspannung durch die Volumenänderungen des Vorspannungselementes dahingehend regulierbar, dass der Dichtungsdruck für eine temporär vorliegende Umweltbedingung aktiv angepasst werden kann. Dazu werden insbesondere Superabsorber vorgeschlagen, die das Vorspannungselement aufweist kann oder gänzlich aus dem Superabsorber besteht.

### Bezugszeichenliste

- 8: Zweiter Zwischenraum
- 9: Erster Zwischenraum
- 10: Vorraum
- 11: Trägerring
- 12: Schleuderring
- 13: Elastomer
- 14: Absorber
- 15: Anlageblech
- 16: Erste radiale Dichtlippe
- 17: Axiale Dichtlippe
- 18: konisches Segment
- 19: Endstück
- 21: Elastomer
- 22: Absorber
- 23: Wanderlippe
- 31: Schleuderring
- 32: Trägerring
- 33: Anlageblech
- 34: Endstück des Anlageblechs
- 35: schwach vorgespannte Dichtlippe
- 36: stark vorgespannte Dichtlippe
- 37: Absorber
- 38: Radiale Dichtlippe
- 39: Elastomer
- 41: Trägerring
- 42: Schleuderring
- 43: Elastomer
- 44: Endstück
- 45: Vorspannring
- 46: Axiale Dichtlippe
- 47: Superabsorber
- 48: Spalt
- 49: Radiale Dichtlippe
- 61: Wanderlippe
- 62: Superabsorber
- 63: Elastomer
- 64: Vorspannringzwischenlage
- 71: Elastomer
- 72: Mehrlagige Dichtlippe
- 73: Vorspannring

## Patentansprüche

1. Dichtungsanordnung zur Abdichtung eines Wälzlagers, wobei die Dichtungsanordnung eine zur Bildung eines Dichtkontaktes vorgesehene Dichtlippe (16,17,35,36,38,46,49,72) aufweist, wobei die Dichtlippe (16,17,23,35,38,46,61,72) mittels eines ein Volumen aufweisendes Vorspannungselementes (14,22,37,47,62) vorgespannt ist, **dadurch gekennzeichnet, dass** dass Volumen des Vorspannungselementes (14,22,37,47,62) in Abhängigkeit eines Feuchtigkeitswertes des Wälzlagers änderbar ist.

2. Dichtungsanordnung nach Anspruch 1, wobei das Vorspannungselement (14,22,37,47,62) aus einem wasserabsorbierenden Material, insbesondere einem Superabsorber (47, 62), besteht oder das wasserabsorbierende Material aufweist.

3. Dichtungsanordnung nach einem der vorhergehenden Ansprüche, wobei das Vorspannungselement (14,22,37) mit einem die Dichtlippe (16,17,23, 35,38) ausbildenden, elastischen Teil (13, 21,39, 63) gekoppelt ist.

4. Dichtungsanordnung nach Anspruch 3, wobei eine Änderung des Volumens des Vorspannungselementes (14,22,37,47,62) eine Änderung einer relativen Position der Dichtlippe (16,17,23,35,38,46,61,72) innerhalb der Dichtungsanordnung und/oder einer Form der Dichtlippe (16,17,23,35,38,46,61,72) bewirkt.

5. Dichtungsanordnung nach einem der vorhergehenden Ansprüche, wobei die Dichtlippe (16,17,23,35,38,46,61,72) unter Vorspannung an einer Anlagefläche zur Anlage kommt und den Dichtkontakt auf der Anlagefläche bildet.

6. Dichtungsanordnung nach Anspruch 5, wobei die Position der Dichtlippe (61) innerhalb der Dichtungsanordnung derart änderbar ist, dass der Dichtkontakt in einen aus der Anlagefläche und der Dichtlippe (61) gebildeten Dichtspalt übergeht.

7. Dichtungsanordnung nach einem der vorhergehenden Ansprüche, wobei der Dichtkontakt ein schleifender oder ein statischer Dichtkontakt ist.

8. Dichtungsanordnung nach Anspruch 7, wobei der schleifende Dichtkontakt in Abhängigkeit vom Materialabrieb der Dichtlippe (23,35,46,61) unterschiedliche Positionen auf der Anlagefläche einnimmt.

9. Dichtungsanordnung nach einem der vorhergehenden Ansprüche, wobei die Dichtlippe eine radiale (16,38,49,72) oder eine axiale Dichtlippe (17,23,35,46,61) ist.

10. Dichtungsanordnung nach einem der vorhergehenden Ansprüche, wobei das Vorspannungselement (14,22, 37) die Dichtlippe mittels eines Anlageringes (15, 33) wippenartig bewegt.

11. Dichtungsanordnung nach einem der Ansprüche 1 bis 9, wobei das Vorspannungselement (47,61) einstückig mit einem Vorspannring (45,73) verbunden ist.

12. Dichtungsanordnung nach Anspruch 11, wobei das Vorspannungselement (47) und der Vorspannring (45) zusammen einen zweilagigen Betätiger ausbilden.

13. Dichtungsanordnung nach Anspruch 12, wobei die Dichtlippe (61,72) mit dem Vorspannring (73) einstückig verbunden ist.

14. Dichtungsanordnung nach Anspruch 13, wobei die Dichtlippe (61,72), der Vorspannring (73) und das Vorspannungselement (62) eine dreilagige Dichtlippe (61,72) ausbilden.

15. Wälzlager, insbesondere Radlager, mit einer oder mehreren Dichtungsanordnungen nach einem der vorhergehenden Ansprüche.

## Claims

1. Sealing arrangement for sealing an anti-friction bearing, the sealing arrangement having a sealing lip (16, 17, 35, 36, 38, 46, 49, 72) which is provided for forming a sealing contact, the sealing lip (16, 17, 23, 35, 38, 46, 61, 72) being prestressed by means of a prestressing element (14, 22, 37, 47, 62) which has a volume, **characterized in that** the volume of the prestressing element (14, 22, 37, 47, 62) can be varied as a function of a moisture value of the anti-friction bearing.

2. Sealing arrangement according to Claim 1, the prestressing element (14, 22, 37, 47, 62) being composed of a water-absorbing material, in particular a superabsorber (47, 62), or having the water-absorbing material.

3. Sealing arrangement according to one of the preceding claims, the prestressing element (14, 22, 37) being coupled to an elastic part (13, 21, 39, 63) which forms the sealing lip (16, 17, 23, 35, 38).

4. Sealing arrangement according to Claim 3, a change in the volume of the prestressing element (14, 22, 37, 47, 62) bringing about a change in a relative position of the sealing lip (16, 17, 23, 35, 38, 46, 61, 72) within the sealing arrangement and/or in a shape of the sealing lip (16, 17, 23, 35, 38, 46, 61, 72).

5. Sealing arrangement according to one of the preceding claims, the sealing lip (16, 17, 23, 35, 38, 46, 61, 72) coming into contact with a bearing face under prestress and forming the sealing contact on the bearing face.

6. Sealing arrangement according to Claim 5, it being possible for the position of the sealing lip (61) within the sealing arrangement to be varied in such a way that the sealing contact merges into a sealing gap which is formed from the bearing face and the sealing lip (61).

7. Sealing arrangement according to one of the preceding claims, the sealing contact being a rubbing or a static sealing contact.

8. Sealing arrangement according to Claim 7, the rubbing sealing contact assuming different positions on the bearing face as a function of the material abrasion of the sealing lip (23, 35, 46, 61).

9. Sealing arrangement according to one of the preceding claims, the sealing lip being a radial (16, 38, 49, 72) or an axial sealing lip (17, 23, 35, 46, 61).

10. Sealing arrangement according to one of the preceding claims, the prestressing element (14, 22, 37) moving the sealing lip in a rocker-like manner by means of a bearing ring (15, 33).

11. Sealing arrangement according to one of Claims 1 to 9, the prestressing element (47, 61) being connected integrally to a prestressing ring (45, 73).

12. Sealing arrangement according to Claim 11, the prestressing element (47) and the prestressing ring (45) together forming a two-layer actuator.

13. Sealing arrangement according to Claim 12, the sealing lip (61, 72) being connected integrally to the prestressing ring (73).

14. Sealing arrangement according to Claim 13, the sealing lip (61, 72), the prestressing ring (73) and the prestressing element (62) forming a three-layer sealing lip (61, 72).

15. Anti-friction bearing, in particular wheel bearing, having one or more sealing arrangements according to one of the preceding claims.

## Revendications

1. Agencement d'étanchéité pour l'étanchéité d'un palier à roulement, dans lequel l'agencement d'étanchéité présente une lèvre d'étanchéité (16, 17, 35, 36, 38, 46, 49, 72) prévue pour former un contact d'étanchéité, la lèvre d'étanchéité (16, 17, 23, 35, 38, 46, 61, 72) étant précontrainte au moyen d'un élément de précontrainte (14, 22, 37, 47, 62) présentant un volume, **caractérisé en ce que** le volume de l'élément de précontrainte (14, 22, 37, 47, 62) peut être modifié en fonction d'une valeur d'humidité du palier à roulement.

2. Agencement d'étanchéité selon la revendication 1, dans lequel l'élément de précontrainte (14, 22, 37, 47, 62) se compose d'un matériau absorbant l'eau, notamment un superabsorbant (47, 62), ou présente le matériau absorbant l'eau.

3. Agencement d'étanchéité selon l'une quelconque des revendications précédentes, dans lequel l'élément de précontrainte (14, 22, 37) est accouplé à une pièce élastique (13, 21, 39, 63) constituant la lèvre d'étanchéité (16, 17, 23, 35, 38).

4. Agencement d'étanchéité selon la revendication 3, dans lequel une variation du volume de l'élément de précontrainte (14, 22, 37, 47, 62) provoque une variation d'une position relative de la lèvre d'étanchéité (16, 17, 23, 35, 38, 46, 61, 72) à l'intérieur de l'agencement d'étanchéité et/ou d'une forme de la lèvre d'étanchéité (16, 17, 23, 35, 38, 46, 61, 72).

5. Agencement d'étanchéité selon l'une quelconque des revendications précédentes, dans lequel la lèvre d'étanchéité (16, 17, 23, 35, 38, 46, 61, 72) vient en appui avec précontrainte contre une surface d'appui et forme le contact d'étanchéité sur la surface d'appui.

6. Agencement d'étanchéité selon la revendication 5, dans lequel la position de la lèvre d'étanchéité (61) à l'intérieur de l'agencement d'étanchéité peut être modifiée, de telle sorte que le contact d'étanchéité se prolonge par une fente d'étanchéité formée dans la surface d'appui et la lèvre d'étanchéité (61).

7. Agencement d'étanchéité selon l'une quelconque des revendications précédentes, dans lequel le contact d'étanchéité est un contact d'étanchéité glissant ou statique.

8. Agencement d'étanchéité selon la revendication 7, dans lequel le contact d'étanchéité glissant adopte différentes positions sur la surface d'étanchéité en fonction de l'usure du matériau de la lèvre d'étanchéité (23, 35, 46, 61).

9. Agencement d'étanchéité selon l'une quelconque des revendications précédentes, dans lequel la lèvre d'étanchéité est une lèvre d'étanchéité radiale (16, 38, 49, 72) ou une lèvre d'étanchéité axiale (17, 23, 35, 46, 61).

10. Agencement d'étanchéité selon l'une quelconque des revendications précédentes, dans lequel l'élément de précontrainte (14, 22, 37) déplace la lèvre d'étanchéité au moyen d'une bague d'appui (15, 33) à la manière d'une bascule.

11. Agencement d'étanchéité selon l'une quelconque des revendications 1 à 9, dans lequel l'élément de précontrainte (47, 61) est connecté d'une seule pièce à une bague de précontrainte (45, 73).

12. Agencement d'étanchéité selon la revendication 11, dans lequel l'élément de précontrainte (47) et la bague de précontrainte (45) constituent ensemble un dispositif d'actionnement à deux couches.

13. Agencement d'étanchéité selon la revendication 12, dans lequel la lèvre d'étanchéité (61, 72) est connectée d'une seule pièce à la bague de précontrainte (73).

14. Agencement d'étanchéité selon la revendication 13, dans lequel la lèvre d'étanchéité (61, 72), la bague de précontrainte (73) et l'élément de précontrainte (62) forment une lèvre d'étanchéité à trois couches (61, 72).

15. Palier à roulement, notamment palier de roue, comprenant un ou plusieurs agencements d'étanchéité selon l'une quelconque des revendications précédentes.
